# FASCICULE DE BREVET EUROPEEN

(11) **EP 1 223 081 B1**
(45) Date de publication et mention de la délivrance du brevet: **04.01.2006**
(21) Numéro de dépôt: 01403346.8
(22) Date de dépôt: 21.12.2001
(51) Int. Cl.: B60R 5/04, B60J 1/20

(54) **Rideau enroulable, notamment pour véhicule automobile**
Rollvorhang, insbesondere für Kraftfahrzeuge
Roll-up curtain, particularly for cars

(30) Priorité: 12.01.2001 FR 0100406
(43) Date de publication de la demande: 17.07.2002
(73) Titulaire: Centre d'Etude et de Recherche pour l'Automobile ( CERA), 51100 Reims (FR)
(72) Inventeur: Montagne, Frédéric, 51480 Cumière (FR)
(74) Mandataire: Nicolle, Olivier

(56) Documents cités:
- US-A- 5 409 284
- PATENT ABSTRACTS OF JAPAN vol. 1997, no. 07, 31 juillet 1997 (1997-07-31) -& JP 09 067987 A (YOKOTA:KK), 11 mars 1997 (1997-03-11)

## Description

L'invention concerne un rideau enroulable.

L'invention trouve notamment son application dans l'équipement des véhicules automobiles, par exemple en tant que cache-bagages, filet de retenue de bagages, sac de fond de coffre et store pare-soleil.

Les rideaux de ce type comportent habituellement une bande enroulable, des moyens de rappel de la bande à l'état enroulé et un organe rotatif fixé à la bande pour son enroulement.

Pour tendre le rideau, on tire sur une poignée habituellement reliée à une extrémité de la bande pour l'accrocher à un point extérieur. Pour enrouler le rideau, il suffit de décrocher la poignée du point fixe, la bande étant enroulée automatiquement en relâchant la traction sur la poignée.

Cet enroulement automatique s'avère bruyant et brusque. Des parties du rideau et des pièces environnantes peuvent en être abîmées ou coincées.

On connait du document JP-09 067987, un rideau enroulable selon le préambule de la revendication. Toutefois, de tels systèmes présentent l'inconvénient d'ètre de structure complexe et peu compacte.

L'invention vise à obtenir un rideau enroulable remédiant aux inconvénients de l'état de la technique.

Un premier objet de l'invention est un rideau enroulable, notamment pour véhicule automobile, selon la revendication 1.

Grâce à l'invention, l'enroulement est effectué moins rapidement et est freiné. De cette manière, les différentes parties du rideau et des pièces environnantes s'entrechoquent à une moins grande vitesse ou plus du tout, ce qui réduit considérablement les risques de détérioration et prolonge la durée de vie du rideau, en évitant son usure prématurée. De plus, le rideau a un enroulement contrôlé et procure une impression de confort à l'utilisateur.

L'invention permet de diminuer les frottements entre l'organe rotatif et l'organe complémentaire lors de l'enroulement et nécessite peu de moyens de mise en oeuvre. En outre, ces moyens de ralentissement tiennent peu de place.

Suivant une caractéristique, des moyens d'étanchéité sont prévus pour empêcher la substance visqueuse de s'échapper vers l'extérieur.

Dans un mode de réalisation particulier, le rotor est prévu sur la périphérie intérieure de l'organe rotatif et le stator est prévu sur la périphérie extérieure de l'organe complémentaire monté dans l'organe rotatif.

Par exemple, l'organe complémentaire comprend un axe fixé à un carter de logement de la bande enroulée et solidaire en rotation du stator et l'organe rotatif comprend un tube fixé à la bande, dans lequel passe l'axe et est fixé le rotor.

En variante, l'organe complémentaire comprend un axe relié à une poignée de préhension ou d'accrochage de la bande à un point extérieur, et solidaire en rotation du stator, et l'organe rotatif comprend un tube fixé à la bande dans lequel passe l'axe et est fixé le rotor.

Dans un autre mode de réalisation particulier, le rotor est prévu sur la périphérie extérieure de l'organe rotatif.

Par exemple, le stator est fixé à un carter de logement de la bande enroulée, formant organe complémentaire.

Suivant une réalisation simple et permettant une bonne transmission de rotation, l'axe comporte une section transversale non circulaire passant dans un évidement de section complémentaire du stator, de manière à être solidaire en rotation avec ce dernier.

Un deuxième objet de l'invention est un cache-bagages comportant un rideau enroulable tel que décrit ci-dessus.

Un troisième objet de l'invention est un filet de retenue de bagages, comportant un rideau enroulable tel que décrit ci-dessus.

Un quatrième objet de l'invention est un sac de fond de coffre comportant un rideau enroulable tel que décrit ci-dessus.

Un cinquième objet de l'invention est un store pare-soleil comportant un rideau enroulable tel que décrit ci-dessus.

L'invention sera mieux comprise à la lumière de la description qui va suivre, faite en référence aux dessins sur lesquels :
- la figure 1 est une vue schématique en perspective d'une partie de rideau dans un premier mode de réalisation ;
- la figure 2 est une vue schématique éclatée du premier mode de réalisation ;
- la figure 3 est une vue schématique en coupe frontale du premier mode de réalisation ;
- la figure 4 est une vue schématique en coupe frontale du rideau enroulable dans un deuxième mode de réalisation ;
- la figure 5 est une vue schématique en perspective du rideau dans un troisième mode de réalisation.

Aux figures, le rideau enroulable 1 comporte une bande enroulable ou tendelet 2 fixée par une extrémité à un organe rotatif 3 prévu pour l'enroulement et le déroulement de la bande 2 autour. L'organe rotatif 3 est monté tournant par rapport à un organe complémentaire 4 destiné à être fixé à un point extérieur. Des moyens de rappel sont prévus sur la bande 2 et/ou sur l'organe rotatif 3 et/ou sur l'organe complémentaire 4 ou entre ceux-ci pour provoquer la rotation de l'organe rotatif 3 par rapport à l'organe complémentaire 4 dans le sens de l'enroulement de la bande 2 autour de l'organe rotatif 3 et comprennent par exemple des ressorts. L'organe rotatif 3 est par exemple formé d'un cylindre et a une largeur, transversalement à la bande 2, supérieure ou égale à la largeur de celle-ci.

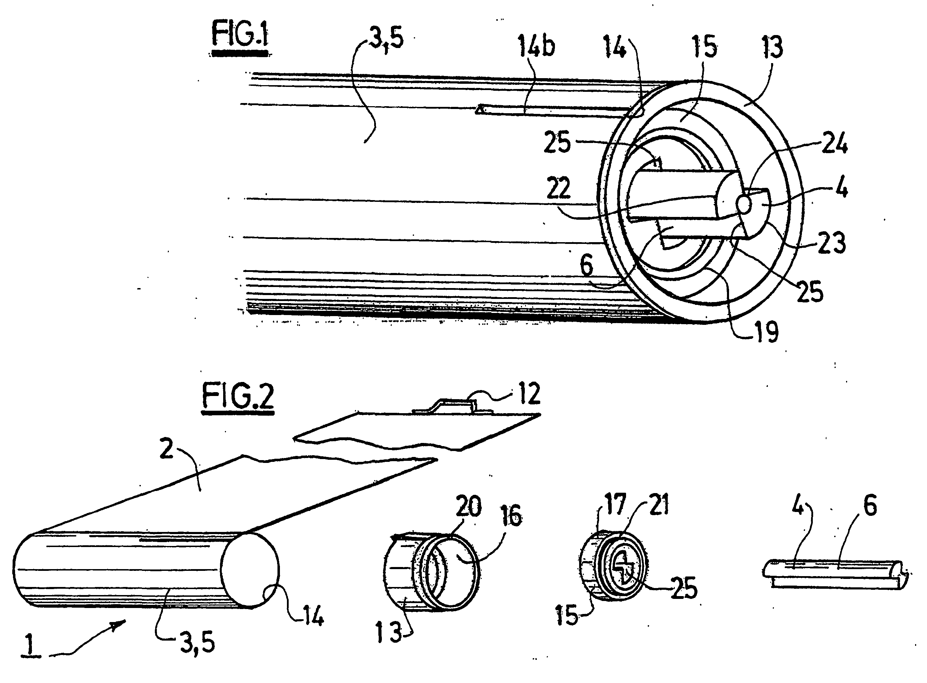

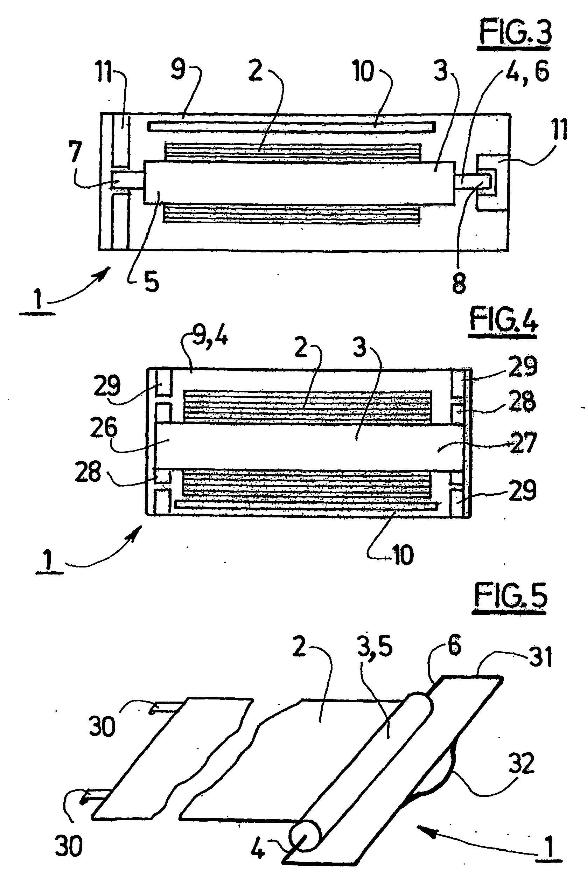

Aux figures 1 à 3, l'organe rotatif 3 est formé d'un tube 5 creux dans lequel passe un axe 6, formant l'organe complémentaire 4, ayant ses deux extrémités 7, 8 dépassant du tube 5. L'organe rotatif 3 est logé dans un carter 9 comportant une fente 10 prévue pour le passage de la bande 2 au cours de son enroulement et de son déroulement. L'axe 6 est fixé par ses extrémités 7, 8 dans le carter 9 par l'intermédiaire d'organes de blocage 11 fixés aux parois du carter 9, par exemple à ses parois axiales ainsi que représenté à gauche de la figure 3 ou à ses parois latérales ainsi que représenté à droite de la figure 3.

Une poignée 12 est prévue à l'extrémité libre de la bande 2 pour tirer dessus afin de la dérouler et l'accrocher à un point fixe extérieur pour la maintenir à l'état déroulé. La poignée 12 et la fente 10 sont agencées pour que la première dépasse de la deuxième à l'état enroulé de la bande 2.

Un rotor 13 est fixé sur le tube 5 sur sa périphérie intérieure 14 par tout moyen approprié, par exemple par clipsage ou autre. Un stator 15 complémentaire du rotor 13 est fixé à l'axe 6 par tout moyen approprié. Le rotor 13 et le stator 15 sont de forme telle que le stator 15 peut être inséré dans le rotor 13 et que le rotor 13 est apte à tourner autour du stator 15. Dans les réalisations représentées, le rotor 13 est en forme de manchon cylindrique creux, comportant un compartiment intérieur 16 de roulement par rapport à la périphérie extérieure du stator 15 présentant une surface 17 extérieure cylindrique complémentaire de roulement par rapport au compartiment 16.

Il existe un espace entre la surface extérieure 17 du stator 15 et la surface intérieure du compartiment 16 du rotor 13. Une substance visqueuse de frottement 19 se trouve dans cet espace. La substance visqueuse 19 est par exemple insérée au montage sur la surface extérieure 17 et/ou sur la surface intérieure du compartiment 16 du rotor 13. La substance visqueuse 19 est telle qu'elle permet la rotation de l'organe rotatif 3 dans les deux sens pour l'enroulement et le déroulement de la bande 2 et qu'elle provoque un ralentissement de la rotation du rotor 13 par rapport au stator 15, par friction.

Des moyens d'étanchéité sont prévus pour empêcher la substance visqueuse 19 de s'échapper de l'espace compris entre le rotor 13 et le stator 15. Ces moyens d'étanchéité comprennent par exemple un rebord 20 sur le stator 13 recouvrant partiellement le bord extérieur 21 du stator 15. Ce rebord 20 peut être prévu des deux côtés du rotor 13, transversaux à l'axe 6. Dans une réalisation non représentée, les moyens d'étanchéité comportent un capuchon recouvrant l'une et/ou l'autre côtés transversaux axialement du rotor 13 et du stator 15, et par exemple fixé au rotor 13. Les moyens d'étanchéité sont aptes à maintenir la substance visqueuse 19 dans l'espace compris entre le rotor 13 et le stator 15.

L'axe 6 est par exemple de section transversale non circulaire, aux figures 1 et 2 en forme de deux secteurs circulaires 22, 23 reliés entre eux par des rainures 24, 25. Le stator 15 comporte un évidement 25 central de forme complémentaire de la section transversale de l'axe 6. L'axe 6 est immobilisé en rotation par rapport au stator 15 par complémentarité de forme.

A la figure 3, les organes 11 de blocage présentent un évidement de forme complémentaire de la section transversale de l'axe 6 afin de l'immobiliser dans le carter 9 par complémentarité de forme.

Le rotor 13 est prévu à la figure 1 sur une extrémité du tube 5 en étant immobilisé par rapport à celui-ci, par exemple par insertion à force, le tube 5 comportant une fente 14b partant de ce bord. Le rotor 13 peut également être prévu aux deux extrémités du tube 5. Dans une variante non représentée, il peut être prévu entre les deux extrémités du tube 5, par exemple en plusieurs endroits.

A la figure 4, les parties portant les mêmes signes de référence désignent des parties identiques à celles des figures 1 à 3. L'organe rotatif 3 est formé d'un cylindre creux ou plein et comporte deux extrémités 26, 27 au-delà de la largeur de la bande 2. Le rotor 28 est fixé sur la périphérie extérieure de l'organe rotatif 3.

Un stator 29 complémentaire du rotor 28 et fixé sur le carter 9, par exemple sur ses parois axiales. Le rotor 28 est apte à tourner dans le stator 29 dans lequel il est inséré. Le carter 9 forme organe complémentaire 4 par rapport auquel l'organe rotatif 3 est monté tournant. Un rotor 28 et un stator 29 sont prévus sur chaque extrémité 26, 27 de l'organe rotatif 3.

Dans des réalisations non représentées, le rotor 28 est ralenti par d'autres moyens, par exemple par des engrenages ou par une transmission à chaîne.

A la figure 5, le rideau 1 comporte des parties similaires à celles décrites aux figures 1 et 2, mis à part le fait que des moyens d'attache à un point fixe sont prévus sur l'extrémité libre de la bande 2 au lieu de la poignée 12. Ces moyens d'attache comprennent par exemple deux pattes 30 d'attache, par exemple à crochets, vis ou autres. L'organe 4 complémentaire est fixé à une fourche 31 du support d'une poignée 32 permettant la traction sur la bande 2 pour la dérouler et son accrochage à un point fixe extérieur pour tendre le rideau 1.

## Revendications

1. Rideau enroulable (1), notamment pour véhicule automobile, comportant :
- une bande enroulable (2) ;
- un carter (9) de logement de la bande enroulable (2) ;
- des moyens de rappel de la bande (2) à l'état enroulé ;
- un organe rotatif (3) fixé à la bande (2) pour son enroulement autour ;
- un rotor (13) sur l'organe rotatif (3) ;
- un stator (15) complémentaire du rotor (13), prévu sur un organe complémentaire (4) destiné à être fixé à un point extérieur et par rapport auquel l'organe rotatif (3) est monté tournant, le stator (15) étant solidaire du carter (9) de logement de la bande enroulable ;
- des moyens de ralentissement (19) de la rotation du rotor (13) par rapport au stator (15) dans le sens d'enroulement de l'organe rotatif (3), lesdits moyens de ralentissement comprenant une substance visqueuse de frottement ;
ledit rideau étant **caractérisé en ce que** la substance visqueuse de frottement est comprise dans l'espace entre la surface extérieure (17) du stator (15) et la surface intérieure du compartiment (16) du rotor (13). de sorte à réduire les frottements entre le rotor (13) et le stator (15).

2. Rideau enroulable (1) suivant la revendication 1, **caractérisé en ce que** des moyens d'étanchéité (20, 21) sont prévus pour empêcher la substance visqueuse (19) de s'échapper vers l'extérieur.

3. Rideau enroulable (1) suivant l'une quelconque des revendications 1 à 2, **caractérisé en ce que** le rotor (13) est prévu sur la périphérie intérieure (14) de l'organe rotatif (3) et le stator (15) est prévu sur la périphérie extérieure de l'organe complémentaire (4) monté dans l'organe rotatif (3).

4. Rideau enroulable (1) suivant la revendication 3, **caractérisé en ce que** l'organe complémentaire (4) comprend un axe (6) fixé au carter (9) de logement de la bande enroulée (2) et solidaire en rotation du stator (15) et l'organe rotatif (3) comprend un tube (5) fixé à la bande (2), dans lequel passe l'axe (6) et est fixé le rotor (13).

5. Rideau enroulable (1) suivant la revendication 3, **caractérisé en ce que** l'organe complémentaire (4) comprend un axe (6) relié à une poignée (32) de préhension ou d'accrochage de la bande (2) à un point extérieur, et solidaire en rotation du stator (15), et l'organe rotatif (3) comprend un tube (5) fixé à la bande (2) dans lequel passe l'axe (6) et est fixé le rotor (13).

6. Rideau enroulable (1) suivant l'une quelconque des revendications 1 à 2, **caractérisé en ce que** le rotor (28) est prévu sur la périphérie extérieure de l'organe rotatif (3).

7. Rideau enroulable (1) suivant la revendication 6 et l'une quelconque des revendications 1 à 2, **caractérisé en ce que** le stator (15) est fixé au carter (9) de logement de la bande enroulée, formant organe complémentaire (4).

8. Rideau enroulable (1) suivant l'une quelconque des revendications 4 et 5, **caractérisé en ce que** l'axe (6) comporte une section transversale non circulaire (22, 23, 24, 25) passant dans un évidement (25) de section complémentaire du stator (15), de manière à être solidaire en rotation de ce dernier.

9. Cache-bagages comportant un rideau enroulable (1) selon l'une quelconque des revendications 1 à 8.

10. Filet de retenue de bagages, comportant un rideau enroulable (1) selon l'une quelconque des revendication 1 à 8.

11. Sac de fond de coffre, comportant un rideau enroulable (1) selon l'une quelconque des revendications 1 à 8.

12. Store pare-soleil, comportant un rideau enroulable (1) selon l'une quelconque des revendications 1 à 8.

## Patentansprüche

1. Einrollbarer Vorhang (1), insbesondere für das Kraftfahrzeug, umfassend:
- ein einrollbares Band (2);
- ein Aufnahmegehäuse (9) des einrollbaren Bandes (2);
- Rückführmittel des Bandes (2) in den eingerollten Zustand;
- ein am Band (2) zu seiner Befestigung darum befestigtes Rotationsorgan (3);
- ein Rotor (13) am Rotationsorgan (3);
- ein zum Rotor (13) auf einem komplementären, zur Befestigung an einem äußeren Punkt bestimmten Organ (4) vorgesehener komplementärer Stator (15), im Verhältnis zu dem das Rotationsorgan (3) drehend angebracht ist, wobei der Stator (15) mit dem Aufnahmegehäuse (9) des einrollbaren Bandes fest verbunden ist;
- Verzögerungsmittel (19) der Rotation des Rotors (13) im Verhältnis zum Stator (15) in der Einrollrichtung des Rotationsorgans (3), wobei die genannten Verzögerungsmittel eine viskose Reibungsflüssigkeit umfassen;
wobei der genannte Vorhang **dadurch gekennzeichnet ist, dass** die viskose Reibungssubstanz in dem Raum zwischen der äußeren Fläche (17) des Stators (15) und der inneren Fläche des Fachs (16) des Rotors (13) inbegriffen ist, sodass die Reibungen zwischen dem Rotor (13) und dem Stator (15) reduziert werden.

2. Einrollbarer Vorhang (1) gemäß Anspruch 1, **dadurch gekennzeichnet, dass** Abdichtungsmittel (20, 21) vorgesehen sind, um zu verhindern, dass die viskose Substanz (19) nach außen dringt.

3. Einrollbarer Vorhang (1) gemäß Anspruch 1 bis 2, **dadurch gekennzeichnet, dass** der Rotor (13) auf der inneren Peripherie (14) des Rotationsorgans (3) vorgesehen ist und der Stator (15) auf der äußeren Peripherie des im Rotationsorgan (3) angebrachten komplementären Organs (4) vorgesehen ist.

4. Einrollbarer Vorhang (1) gemäß Anspruch 3, **dadurch gekennzeichnet, dass** das komplementäre Organ (4) eine am Aufnahmegehäuse (9) des eingerollten Bandes (2) befestigte und in Rotation des Stators (15) fest befestigte Achse (6) umfasst und das Rotationsorgan (3) eine am Band (2) befestigte Röhre (5) umfasst, in der die Achse (6) hindurchtritt und am Rotor (13) befestigt ist.

5. Einrollbarer Vorhang (1) gemäß Anspruch 3, **dadurch gekennzeichnet, dass** das komplementäre Organ (4) eine mit einem Griff (32) zum Ergreifen oder Befestigten des Bandes (2) an einem äußeren Punkt verbundene und in Rotation des Stators (15) fest befestigte Achse (6) umfasst und das Rotationsorgan (3) eine am Band (2) befestigte Röhre (5) umfasst, in der die Achse (6) hindurchtritt und am Rotor (13) befestigt ist.

6. Einrollbarer Vorhang (1) gemäß Anspruch 1 bis 2, **dadurch gekennzeichnet, dass** der Rotor (28) auf der äußeren Peripherie des Rotationsorgans (3) vorgesehen ist.

7. Einrollbarer Vorhang (1) gemäß Anspruch 6 und Anspruch 1 bis 2, **dadurch gekennzeichnet, dass** der Stator (15) am Aufnahmegehäuse (9) des eingerollten Bandes befestigt, ist wobei er ein komplementäres Organ (4) bildet.

8. Einrollbarer Vorhang (1) gemäß Anspruch 4 und 5, **dadurch gekennzeichnet, dass** die Achse (6) einen in eine Aussparung (25) mit komplementärem Querschnitt des Stators (15) hindurchtretenden nicht kreisförmigen Querschnitt (22, 23, 24, 25) umfasst, so dass sie mit diesem in Rotation fest verbunden ist.

9. Gepäckabdeckung mit einem einrollbaren Vorhang (1) gemäß Anspruch 1 bis 8.

10. Gepäcknetz mit einem einrollbaren Vorhang (1) gemäß Anspruch 1 bis 8.

11. Kofferraumbodensack mit einem einrollbaren Vorhang (1) gemäß Anspruch 1 bis 8.

12. Sonnenschutz-Vorhang mit einem einrollbaren Vorhang (1) gemäß Anspruch 1 bis 8.

## Claims

1. A windable curtain (1), in particular for a motor vehicle, comprising:
- a windable band (2);
- a casing (9) for housing the windable band (2);
- means of returning the band (2) to the wound state;
- a rotary member (3) fixed to the band (2) for winding it around;
- a rotor (13) on the rotary member (3);
- a stator (15) complementary to the rotor (13), provided on a complementary member (4) intended to be fixed to an external point and with respect to which the rotary member (3) is mounted so as to rotate, the stator (15) being fixed to the casing (9) housing the windable band;
- means (19) of slowing the rotation of the rotor (13) with respect to the stator (15) in the direction of winding of the rotary member (3), the said slowing means comprising a viscous friction substance;
the said curtain being **characterised in that** the viscous friction substance is included in the space between the external surface (17) of the stator (15) and the internal surface of the compartment (16) of the rotor (13) so as to reduce the friction between the rotor (13) and the stator (15).

2. A windable curtain (1) according to Claim 1, **characterised in that** sealing means (20, 21) are provided to prevent the viscous substance (19) from escaping to the outside.

3. A windable curtain (1) according to either one of Claims 1 to 2, **characterised in that** the rotor (13) is provided on the internal periphery (14) of the rotary member (3) and the stator (15) is provided on the external periphery of the complementary member (4) mounted in the rotary member (3).

4. A windable curtain (1) according the Claim 3, **characterised in that** the complementary member (4) comprises a spindle (6) fixed to the casing (9) housing the wound band (3) and rotationally fixed to the stator (15) and the rotary member (3) comprises a tube (5) fixed to the band (2), through which the spindle (6) passes and in which the rotor (13) is fixed.

5. A windable curtain (1) according to Claim 3, **characterised in that** the complementary member (4) comprises a spindle (6) connected to a handle (32) for gripping or attachment of the band (2) at an external point, and rotationally fixed to the stator (15), and the rotary member (3) comprises a tube (5) fixed to the band (2) in which the spindle (6) passes and to which the rotor (13) is fixed.

6. A windable curtain (1) according to either one of Claims 1 to 2, **characterised in that** the rotor (28) is provided on the external periphery of the rotary member (3).

7. A windable curtain (1) according to Claim 6 and either one of Claims 1 to 2, **characterised in that** the stator (15) is fixed to the casing (9) housing the wound band, forming a complementary member (4).

8. A windable curtain (1) according to either one of Claims 4 and 5, **characterised in that** the spindle (6) comprises a non-circular transverse section (22, 23, 24, 25) passing through a recess (25) with a complementary cross section in the stator (15), so as to be rotationally fixed to the latter.

9. A luggage cover comprising a windable curtain (1) according to any one of Claims 1 to 8.

10. A luggage retaining net, comprising a windable curtain (1) according to any one of Claims 1 to 8.

11. A boot bottom bag, comprising a windable curtain (1) according to any one of Claims 1 to 8.

12. A sun blind, comprising a windable curtain (1) according to any one of Claims 1 to 8.
